# EUROPEAN PATENT SPECIFICATION

(11) **EP 4 146 120 B1**
(45) Date of publication and mention of the grant of the patent: **17.04.2024**
(21) Application number: 21726713.7
(22) Date of filing: 03.05.2021
(51) Int. Cl.: A61C 8/00, A61C 13/265, A61C 13/275

(54) **BAR, ASSEMBLY OF AN OVERDENTURE AND A BAR, OVERDENTURE**
BAR, ANORDNUNG EINER DECKPROTHESE UND BAR, DECKPROTHESE
BARRE, ENSEMBLE D'UNE PROTHÈSE HYBRIDE ET D'UNE BARRE, ET PROTHÈSE HYBRIDE

(30) Priority: 05.05.2020 BE 202005294
(43) Date of publication of application: 15.03.2023
(73) Proprietor: BV Dr. van Doorne Luc, 8020 Oostkamp (BE)
(72) Inventor: VAN DOORNE, Luc, 8020 Oostkamp (BE)
(74) Representative: De Clercq & Partners
(86) International application number: PCT/IB2021/053671
(87) International publication number: WO 2021/224753

(56) References cited:
- EP-A1- 1 872 740
- WO-A1-2018/017331
- WO-A2-2004/060189
- US-A1- 2015 064 653
- OTÁVIOAUGUSTO LUITZ JAROS ET AL: "Biomechanical behavior of an implant system using polyether ether ketone bar: Finite element analysis", JOURNAL OF INTERNATIONAL SOCIETY OF PREVENTIVE AND COMMUNITY DENTISTRY, vol. 8, no. 5, 1 January 2018 (2018-01-01) , page 446, XP055749476, ISSN: 2231-0762, DOI: 10.4103/jispcd.JISPCD_183_18

## Description

The present invention relates to a bar for connecting dental implants that are anchored in a jaw bone, wherein this bar comprises a base with an underside that is provided to be directed towards the jaw bone with the implants, wherein the bar is provided to be received in a cavity of a component of a dental prosthesis, such as an overdenture, wherein among other things this component imitates the gums.

The present invention also relates to an assembly of an overdenture and said bar. An assembly of this kind is particularly suitable for serving as a temporary overdenture. The present invention also relates to an overdenture that is provided to interact with dental implants anchored in a jaw bone, comprising a component that among other things imitates the gums, and comprising click elements for making click connections for connecting the overdenture and the dental implants.

There are various types of dental prostheses. The present invention relates specifically to implant-borne dental prostheses (overdentures). For these dental prostheses, dental implants are anchored in a jaw bone and the dental prosthesis is connected to these implants. This connection may assume all kinds of forms. Thus, it is possible to use click systems or sliding systems. These dental implants may be implants with all kinds of diameters and dimensions. Thus, these implants may be for example mini dental implants (MDIs), narrow-diameter implants (NDIs), short wide implants (Short Implants) or standard diameter implants (SDIs).

There are various ways of connecting a dental prosthesis to implants. Thus, it is possible to use a bar, which connects these implants to each other. This bar is then screwed onto the implants. The dental prosthesis is provided with a cavity in which the bar is receivable/slidable as a form-fit, and detachably. The most important advantage of a bar is that the implants are burdened in group. This means that all individual implants are subject to almost the same load during use of the overdenture, so that there are no implants that are subjected to a much higher load. This is mainly of importance during the period of osseointegration of the implants. Good osseointegration of the implants can be ensured by means of a bar. Owing to the bar, the risk of the implants loosening again, even after the period of osseointegration, is also reduced because not a single implant is loaded too strongly individually, and the risk of excessive forces being exerted on one or more implants is thus low. The disadvantage of a bar is that it is difficult to clean, and therefore is susceptible to calculus and plaque. This may affect the bone and/or gums located around the implants. Thus, there may be chronic irritation of this bone and/or gums and/or they may become infected, so that the implants may loosen with the passage of time.

WO 2004/060189 describes an overdenture that slides over a protective groove, under which several permanent implants are surrounded by a bed of synthetic resin and are thus protected against excessive chewing forces, until osseointegration of these permanent implants. At the level of two ends located opposite each other, the protective sleeve is secured or screwed into the jaw bone to respective extreme indication or temporary implants, which are exposed to the chewing forces, but are removed later to release the permanent implants. The overdenture further comprises a cavity in which the protective groove is receivable. With this overdenture, the implants that are surrounded by the protective groove are not loaded during osseointegration. However, research showed that a limited loading of the implants during the osseointegration phase, stimulates and promotes osseointegration of the implants.

There are also dental prostheses comprising click elements, which are then provided to be snapped onto the respective implants. In this case the implants are then provided for example with an end-piece that is compatible with the click elements. The advantage here is that these end-pieces are easy to clean. A disadvantage is that the implants are each loaded separately, for example during osseointegration. During use of the dental prosthesis, before complete osseointegration of these implants in the jaw bone, this may also cause poor osseointegration or may even restrict osseointegration. Also, while removing and clicking together the dental prosthesis, excessive forces are transmitted to the implants at irregular time points from different directions, and besides poor osseointegration of the implants, painful pressure areas may also develop through impaction of the gums between the implants and the dental prosthesis.

Thus, the aim of the invention is to overcome the aforementioned problems with implant-borne dental prostheses.

This aim is achieved by providing a bar for connecting dental implants that are anchored in a jaw bone, wherein this bar comprises a base with an underside that is provided to be directed towards the jaw bone with the implants, wherein the bar is provided to be received in a cavity of a component of a dental prosthesis, wherein, among other things, this component imitates the gums, wherein this base is made of a biocompatible material comprising a high-performance polymer, and wherein the base comprises two or more recesses that open out on the underside of the base and the bar comprises two or more click elements that are received in the respective recesses, wherein these click elements are provided to make click connections with two or more dental implants for connecting the bar to the dental implants. The jaw bone is at least partially surrounded by gums so that the underside of the base is provided to be directed towards the gums (gingiva).

In this case the bar is provided to be connected to the dental implants directly or indirectly by click connections. Thus, each click element is connected directly or indirectly to a respective dental implant. Thus, the click elements may be connected directly to ball attachments of one-piece MDIs, which are MDIs consisting of one piece. They may also be connected indirectly to narrow-diameter implants (NDIs), short wide implants (Short Implants) or standard diameter implants (SDIs) via an end-piece or retentive abutment. These last-mentioned dental implants may for example each be provided with end-pieces that make a form-fit with the click elements, so that the click elements can simply be clicked onto the respective end-pieces.

In this case the bar can easily be attached to the implants and can easily be removed again, with a click action, so that everything, the implants and/or the end-pieces, can always be cleaned well, so that there is less risk of infections at the level of the implants, and the growth of dental plaque is limited. The end-pieces may for example be screwed to the respective dental implants. Said dental implants may, however, also be configured so that said bar can be clicked onto these implants by means of the click elements. This then relates for example to specific 'one-piece' MDIs.

In addition, the base is made of a biocompatible material, so that this bar is not experienced as unpleasant by the person who makes use of the bar. Such a bar is ideal in itself to be used during the osseointegration phase of the implants, since this bar will ensure distribution of the forces on the various implants so that good osseointegration of these implants will be possible. This bar is provided to be received in a cavity of a component of a dental prosthesis. The fitting in the cavity may take place directly or indirectly, for example with an additional holding element. The bar can then be received detachably in said cavity, wherein the dental prosthesis is then for example secured by sliding over the bar. The bar is then first clicked onto the implants, after which the dental prosthesis is secured by sliding over the bar, thus connecting the dental prosthesis to the implants via the bar. The bar may in this case also be designated by the term 'mesostructure'. Such a configuration is ideal during osseointegration of the implants and is then also preferably used as a temporary dental prosthesis. The bar can then be separated completely, so that it is easily cleanable.

The bar may also be inserted permanently in such a cavity of a component of a dental prosthesis, which among other things is provided to imitate gums, and then is no longer provided to be removed again from this cavity. The dental prosthesis comprising the bar is then provided to be clicked as a whole on the implants, which may or may not be provided with end-pieces. This configuration is ideal once the implants have undergone osseointegration in the jaw bone, and a dental prosthesis of this kind then preferably also serves as a permanent dental prosthesis.

For example, several implants, such as 4, 6 or 8 implants, may be provided in the upper jaw. The bar for these for example 4, 6 or 8 implants then also comprises 4, 6 or 8 recesses with 4, 6 or 8 respective click elements. For example several implants, such as 2, 4 or 6 implants, may be provided in the lower jaw. The bar for these for example 2, 4 or 6 implants then also comprises 2, 4 or 6 recesses with 2, 4 or 6 respective click elements. Thus, these implants may for example be mini dental implants (MDIs), narrow-diameter implants (NDIs), short wide implants (Short Implants) or standard diameter implants (SDIs).

The click elements are preferably glued into the recesses. This prevents undesirable detachment of the click elements from the base.

The click elements may be made in one piece. Thus, these click elements may be made from a material with the necessary rigidity and flexibility so that they can click well on the dental implants and ensure a good connection. The click elements may also consist of several components. The click elements are for example two-part and comprise a cap and an insertion element that is mountable in the cap. The cap and the insertion element may then be made of a different material, wherein the cap is then made of a first material and the insertion element of a second material. This first material is then preferably stiffer and stronger than the second material and the second material is preferably more elastic than the first material. Thus, the first material may for example comprise/be a metal or metal alloy, such as stainless steel or titanium, and the second material may comprise/be an elastic material, such as rubber. The cap is for example a cup-shaped metal cap with a receiving cavity and the insertion element is for example a rubber retention ring, which is provided to be received in the receiving cavity. Thus, the rubber retention ring may be clickably receivable in the cap. With a two-part configuration, the force exerted on each separately placed implant can be determined individually, by choosing which insertion element is fitted in the cap. When the insertion elements are small rubber rings with a different retention force, it is possible to choose which rubber rings are fitted in the cap. The retention per individual implant may thus be altered and adapted to the measured implant stability (primary stability). In this way, for an implant with fragile placement (with low primary stability in the bone), a corresponding click element may be selected, with a weaker rubber ring.

The said biocompatible material of the bar preferably comprises a polyaryletherketone (PAEK), such as polyetheretherketone (PEEK) or polyetherketoneketone (PEKK). PEEK or PEKK are very suitable for use for dental applications and are very well able to distribute forces across the various implants. The base may or may not be designed digitally. The base may be formed by means of a (milled) mould or may be formed by 3D printing. Owing to its material composition, the bar is also easily adaptable by the practitioner by limited milling away/rounding off of excess troublesome edges to avoid injuring the gums on the connecting pieces of its basal side and on its complete coronal side, to allow better sliding of the prosthesis over the bar.

In a preferred embodiment, the click elements are cup-shaped and they are for example each provided to click round an end-piece of a dental implant that is a form-fit with the respective click element. This applies to click connections, which are very easy to make and can be parted again, for example by whoever placed the implants, for example such as the surgeon. The end-pieces are for example screwed onto the respective implants. These cup-shaped click elements may for example be of two-part construction, as described above.

Preferably the base comprises covers, which envelop respective recesses, and connecting pieces, which connect all or some of these covers to one another successively, wherein these covers are cylindrical. Certain connecting pieces may for example be beam-shaped, with a width that is less than the diameter of the covers. The recesses may for example be of circular cross-section. Then by providing these recesses centrally in the covers, the click elements are surrounded well all round by the base and said base is then also well able to distribute forces over different click elements.

More preferably, the base extends along the jaw bone in a longitudinal direction, wherein the covers extend successively next to each other viewed in this longitudinal direction and form local thickenings of the base. The covers then form the thickest components so that these covers are very well able to surround the click elements and distribute operative forces over the various click elements, and thus over the various implants, so that the implants are always loaded collectively and the differences in individual loadings of implants are slight, during use of the bar. Of course, the individual loading may be adapted further for example by the use of different click elements, for example such as the use of two-part click elements with the desired insertion elements. Two successive covers each have for example a certain diameter, wherein the corresponding dimension of a connecting piece that connects these two successive covers to each other and that extends almost perpendicularly to the longitudinal direction, is smaller than both of the aforementioned diameters.

The aim of the invention is also achieved by providing an assembly of an overdenture and a bar, wherein the bar is a bar as presented above. This overdenture then interacts with the bar. The bar is connected directly or indirectly to the implants by means of click connections, after which the overdenture will then be connected to the bar, for example pushed over the bar. This assembly is very suitable for promoting osseointegration of the implants during the osseointegration phase of the implants, after the implants have been fitted in the jaw bone. The implants are thus directly functional and they are loaded directly, but they are not overloaded. The bar will ensure that the implants are loaded in a group, because the bar distributes the forces over the various implants. This means that when the overdenture is connected to the bar, the individual implants are not loaded too heavily individually and the differences between the loadings of the implants are not too great. As a result, all implants are stimulated sufficiently to be integrated well in the jaw bone, but they are also not loaded excessively, which would have an adverse effect on integration. The result is that the implants are firmly anchored in the jaw bone. An additional advantage is that the wearer of this overdenture already has the feeling that this prosthesis is well secured and it is usable, and for example just as well as a permanent overdenture, already shortly after placement of the implants. Therefore this assembly, optionally provided the food is suitable, can already be used shortly after placement of the implants without the implants being loaded excessively. The advantages and preferred embodiments of the bar described above also apply here for this assembly. The overdenture comprises among other things, artificial teeth and a component that imitates gums.

In a specific embodiment, the overdenture is connectable, for example slidable, with the bar and for this purpose the overdenture comprises a component with a cavity in which the bar is receivable as a form-fit and detachably, wherein among other things this component imitates the gums. By providing said form-fit cavity, forces that act upon the artificial teeth of the overdenture are transmitted well to the bar and the bar will thus be able to distribute the forces properly over the various implants. The form-fit cavity namely ensures that there is little freedom of movement between the overdenture and the bar. Moreover, the bar may, for example at the level of the connecting pieces if the bar comprises the aforementioned covers and connecting pieces, be provided with projections, wherein said cavity is slidable as a form-fit round these projections, to reinforce the fastening of the bar in the cavity. The bar may be glued into the cavity, wherein, with a suitable choice of glue, the bar is detachable.

In an alternative embodiment, the bar may be glued into the cavity, so that the assembly is then provided to serve as a permanent overdenture.

In another embodiment, the assembly comprises a holder, in which the bar is receivable as a form-fit and the overdenture comprises a component with a cavity, in which the holder is receivable as a form-fit, wherein among other things this component imitates the gums. This holder is then for example made of a biocompatible material comprising a high-performance polymer, such as PEEK. By working with an additional holder, it will be possible to connect the bar more stably to the aforementioned component. The bar may in this case be glued onto the holder and/or be provided to be received detachably in the holder. The holder may be glued onto said component, for example with a more permanent glue.

More preferably, the aforementioned component is made of a plastic, preferably polymethyl methacrylate. The bar may for example be made of PEEK. PEEK and polymethyl methacrylate are mutually compatible.

The aim of the invention is also achieved by providing an overdenture that is provided to interact with dental implants anchored in a jaw bone, comprising a component that among other things imitates the gums, and comprising click elements for making click connections for connecting the overdenture to the dental implants, wherein the overdenture comprises a bar according to the invention and the aforementioned click elements of the overdenture are the click elements of the bar, and wherein said component comprises an underside that is provided to be directed towards the jaw bone with the implants, wherein said underside comprises one or more openings that provide access to a cavity of said component, and wherein the bar is received in this cavity in such a way that the click elements are accessible and are provided to make click connections for connecting the overdenture to the dental implants. In this case the bar is inserted in the overdenture and the bar forms a fixed component of the overdenture. Thus, the bar may be glued into the cavity using a permanent glue, such as a veneer composite resin or a two-component glue, being a glue that provides a firm connection for a sufficient period of time. In this case the bar also reinforces the overdenture, so that it is less liable to break. Overdentures according to the prior art are sometimes provided with a titanium reinforcement. Such provision is superfluous for the aforementioned bar. Higher chewing forces are registered on implants than on natural teeth, so that it is very important for the overdenture to be strong enough. This overdenture is also easily clickably connectable to the implants, for example by clicking this overdenture by means of the click elements on to end-pieces that are screwed onto the implants. It is then also easy to fit this overdenture and then remove it again. After removal of the overdenture, there is no longer a bar connected to the implants, therefore the implants/end-pieces can be cleaned easily and well. The bar that is present in the overdenture ensures that forces that act upon the overdenture, for example on the artificial teeth of the overdenture, are distributed well over the various implants so that the individual loading of the various implants is parallel and thus there is no implant that is loaded more heavily than another implant. When an overdenture of this kind is used, the risk of development of painful pressure areas at the level of one or more implants is then also low. Such an overdenture can then also be used long-term and is preferably used once the implants have integrated well in the jaw bone. The bar is preferably made of PEEK, and the aforementioned component is preferably made of polymethyl methacrylate. This bar may for example be the bar that has already been used during the osseointegration phase of the implants and that was used in combination with an aforementioned assembly of an overdenture and a bar. In this way, when forming an overdenture with an integrated bar, there is no need to provide a new bar. Even more preferably, this overdenture is produced by connecting together the overdenture and the bar of the aforementioned assembly, and finishing them, in such a way that the aforementioned bar is inserted/integrated in the cavity of the aforementioned overdenture. It will thus be possible to form this overdenture with minimum effort. The overdenture may, whether or not additionally, comprise a holder for the bar, wherein the bar is then fitted in the holder and the holder with the bar extends into said cavity.

The one or more openings that provide access to the cavity of the aforementioned component, and through which the click elements are accessible, may relate to one opening, wherein all click elements are then accessible through this opening and for example almost the complete bar is easily visible. Several openings may also be provided, wherein the bar is then for example only visible from outside at the level of the click elements.

More preferably, the underside of the overdenture comprises several said openings that provide access to the cavity, wherein the number of openings matches the number of click elements and the position of the openings matches the mutual position of the click elements, and wherein the bar is received in this cavity in such a way that the openings and the respective click elements are in line with each other and the click elements are thus accessible through the respective openings and are provided to make click connections for connecting the overdenture to the dental implants. The bar is in this case firmly anchored in the aforementioned component. Preferably said openings form the only locations through which the cavity is accessible and, also preferably, the dimensions of the openings almost coincide with the corresponding dimensions of the click elements.

In a specific embodiment, said cavity and the bar are a form-fit, so that the bar occupies a fixed position relative to said component. The forces that act upon the artificial teeth of the overdenture are then transmitted optimally to the portion that extends round the cavity, and then transmitted via this portion to the bar, wherein the bar then distributes the forces over the various implants.

In another specific embodiment, the overdenture comprises a holder in which the bar is receivable as a form-fit and the holder is receivable as a form-fit in said cavity of the component that among other things imitates the gums.

The present invention is now explained in more detail on the basis of the following detailed description of preferred embodiments according to the present invention. The purpose of this description is exclusively to give illustrative examples and to point out further advantages and features of the present invention, and so is not to be interpreted as a limitation of the field of application of the invention or of the patent rights claimed in the claims.

In this detailed description, the reference numbers are used for referring to the appended drawings, wherein:
- Fig. 1 is a schematic perspective view of a bar according to the invention, wherein this bar comprises 6 click elements;
- Fig. 2 is a schematic representation of the bar shown in Fig. 1, wherein this bar is fastened to dental implants;
- Fig. 3 is a bottom view of an overdenture according to the invention comprising a bar with 4 click elements;
- Fig. 4 shows a schematic cross-section of the overdenture as shown in Fig. 3, wherein this overdenture is clicked onto dental implants;
- Fig. 5 is a black and white line drawing of a bar according to Fig. 1;
- Fig. 6 is a black and white line drawing of an overdenture according to Fig. 3;
- Fig. 7 shows a bottom view of an alternative bar according to the invention;
- Fig. 8 shows a bottom view of an alternative overdenture according to the invention, wherein the bar shown in Fig. 7 has not yet been fitted in the holder;
- Fig. 9 shows a bottom view of the overdenture shown in Fig. 8, wherein the bar is fitted in the holder;
- Fig. 10 is an exploded view of a click element;
- Fig. 11 shows a bottom view of a specific overdenture according to the invention.

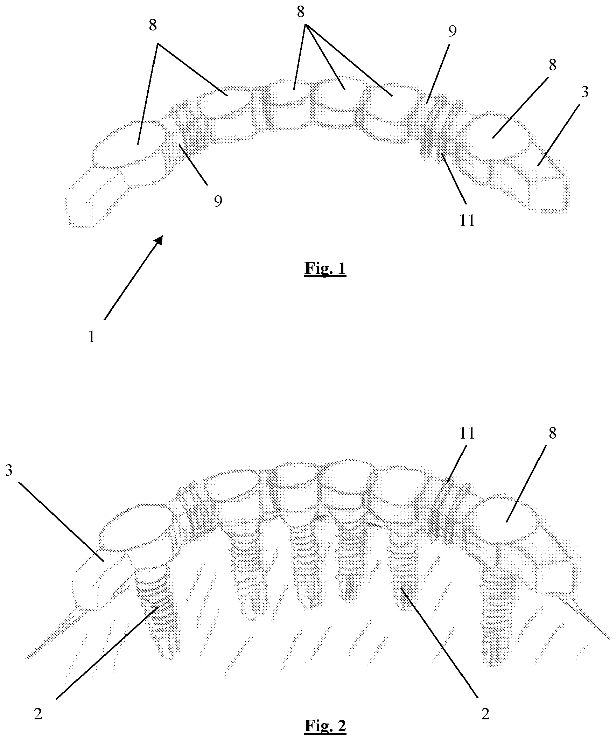

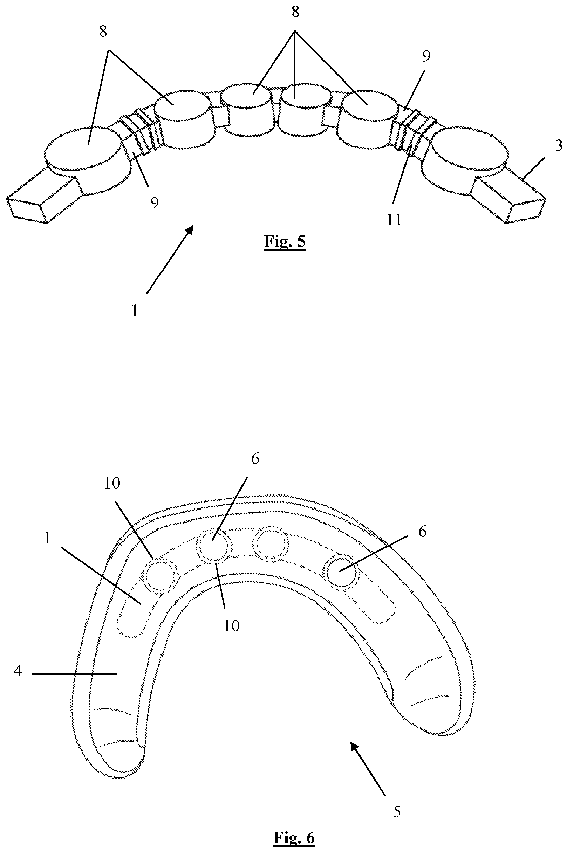

The bar (1) as shown in Figs. 1, 2 and 5 is used for connecting 6 dental implants (2) that are anchored in the jaw bone of the upper jaw. This bar (1) comprises a base (3) made of PEEK, wherein this base (3) comprises an underside that is provided to be directed towards the gums and the jaw bone with the implants (2) and an upper side located opposite this underside. The base (3) comprises six recesses that open out on the underside of the base (3) and the bar (1) further comprises six click elements (6) that are received in the respective recesses. These click elements (6) are provided for making click connections with 6 dental implants (2) for connecting the bar (1) to these 6 dental implants (2).

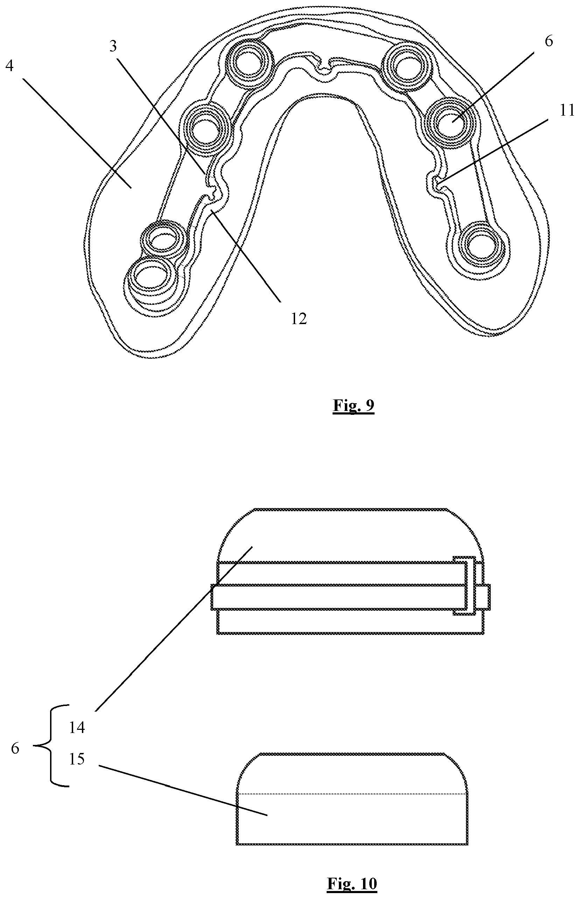

The click elements (6) are cup-shaped and each is provided to click round an end-piece (7) of a dental implant (2) that is a form-fit with the respective click element (6). All of the click elements (6) shown in the figures are two-part click elements (6). These click elements (6) may, however, also be one-piece. These click elements (6) comprise, as shown in Fig. 10, a cap (14) made of stainless steel/titanium and a rubber insert (15). Both the cap (14) and the insert (15) are mainly cup-shaped and the insert (15) is clickably receivable in the cap (14), so that the whole forms a cup-shaped click element (6). The click elements (6) are glued into the recesses.

The bar (1) as shown in Figs. 1, 2 and 5 comprises 6 cylindrical covers (8), which envelop the respective recesses, and beam-shaped connecting pieces (9), which connect certain of these covers (8) to one another successively.

Furthermore, in Figs. 1, 2 and 5, the base (3) is provided to extend along the gums (gingiva) covering the jaw bone in a longitudinal direction so that the base (3) extends along the jaw bone in the longitudinal direction, wherein the covers (8) extend successively next to each other viewed in this longitudinal direction and form local thickenings of the base (3). Some connecting pieces (9) comprise projections (11) with which the base (3) is slidable as a form-fit in a cavity of a temporary overdenture (not shown in the figures). These projections (11) are not essential and may also have a different shape.

This temporary overdenture and this bar (1) are used in the following circumstances. When someone switches over to an implant (2) borne overdenture, the necessary implants (2) are fitted in the jaw bone. Thus, for example 6 implants (2) are fitted in the upper jaw and 4 implants (2) in the lower jaw. A bar (1) according to the invention is then provided for both the upper jaw and the lower jaw. After fitting of the implants (2) in the jaw bone, these implants (2) must undergo integration in the jaw bone. During this osseointegration phase, the bars (1) are clicked onto the respective implants (2). For this purpose, an end-piece (7) that is clickably compatible with the respective click element (6) is screwed onto each implant (2). Here, this bar (1) is easily detachably connectable to the respective end-pieces (7), by clicking, so that this bar (1) can be removed again, and all components can be cleaned well. When teeth are needed, temporary overdentures are connected to these bars (1). These temporary overdentures each comprise a component with a cavity in which the bar (1) is receivable as a form-fit and detachably, wherein, among other things, this component imitates the gums, and they also comprise artificial teeth. Said component is made of polymethyl methacrylate. Once the implants (2) have undergone sufficient osseointegration, the switch is made to a permanent overdenture (5).

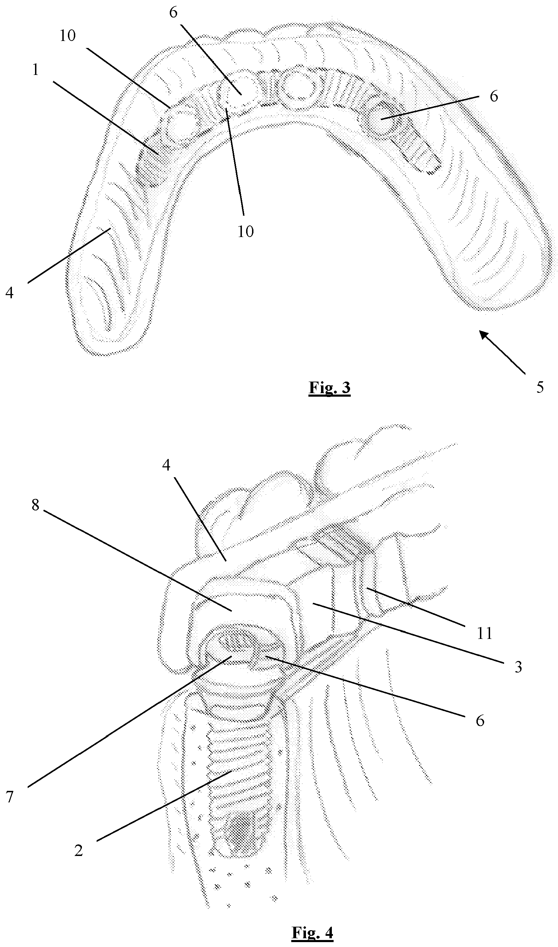

A permanent overdenture (5) of this kind is shown in Figs. 3, 4 and 6. This relates to an overdenture (5) for the lower jaw, which comprises 4 click elements (6). With this permanent overdenture (5), a bar (1) according to the invention is inserted in a component (4) of the overdenture (5), which among other things imitates the gums. Here, the bar (1) is received in a cavity of said component (4) and this component (4) comprises at the level of its underside, being the side that is provided to be directed towards the jaw bone with the implants (2), four openings (10) that provide access to the cavity and whose mutual position matches the mutual position of the click elements (6), and wherein the bar (1) is received in this cavity in such a way that the openings (10) and the respective click elements (6) are extended in each other and the click elements (6) are thus accessible through the respective openings (10) and are provided to make click connections (6) for connecting the overdenture (5) to the dental implants (2). At the level of the openings (10), the component (4) is made very thin, so that the bar (1) is visible through it. This is shown with dotted lines.

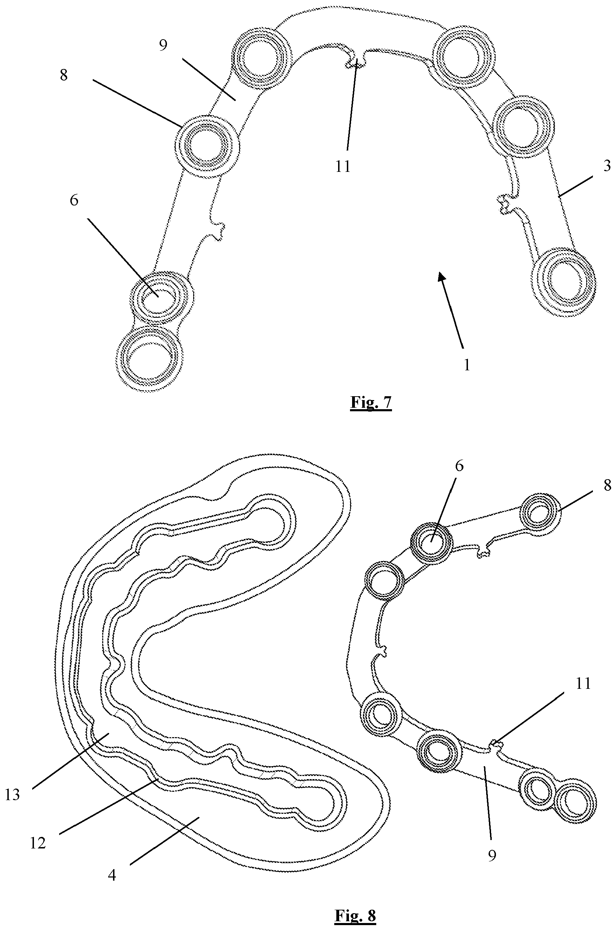

Figs. 7 to 9 show an alternative embodiment of a bar (1) and an overdenture (5) comprising this bar (1). This overdenture (5) may serve as a temporary or permanent overdenture (5). In this alternative embodiment, the overdenture (5) comprises a component (4) that among other things imitates the gums, a holder (12), and a bar (1). The component (4) that among other things imitates the gums comprises a cavity, and the holder (12) is glued into this cavity. The holder (12) serves as a holder of the bar (1). The bar (1) is receivable as a form-fit in a cavity (13) of the holder (12). The bar (1) comprises a base (3) with recesses (10) and local projections (11), and click elements (6) that are received in the recesses (10). The bar (1) is glued into the holder (12) when using the overdenture (5). By using such a holder (12), additional stability is obtained. Here, the bar (1) comprises two-part click elements (6) as shown in Fig. 10.

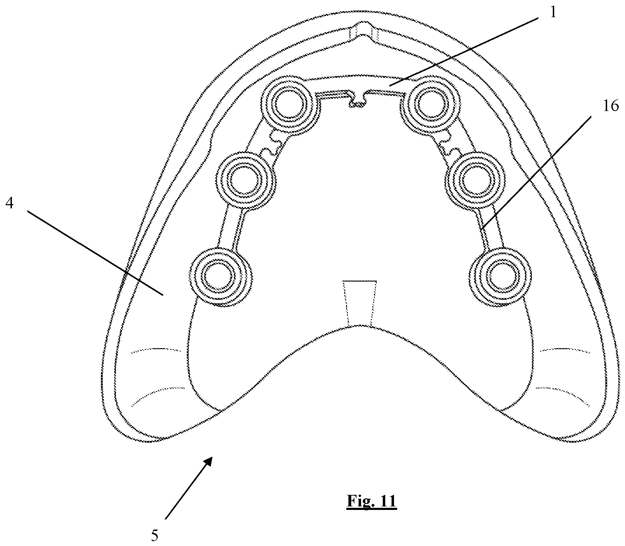

Fig. 11 shows a specific embodiment of an overdenture (5) according to the invention. This overdenture (5) may serve as a temporary or permanent overdenture (5). The overdenture (5) comprises a component (4) that among other things imitates the gums, and a bar (1) that is received in a cavity (16) of the bar (1). The cavity (16) is a form-fit with the bar (1) and is accessible via an opening that is a form-fit with the bar (1) so that the complete bar (1) is visible in use. The component (4) that among other things imitates the gums is provided to cover the user's complete palate.

## Claims

1. Bar (1) for connecting dental implants (2) that are anchored in a jaw bone, wherein this bar (1) comprises a base (3) with an underside that is provided to be directed towards the jaw bone with the implants (2), wherein the bar (1) is provided to be received in a cavity of a component (4) of a dental prosthesis (5), wherein this component (4) among other things imitates the gums, wherein this base (3) is made of a biocompatible material comprising a high-performance polymer, **characterized in that** this base (3) comprises two or more recesses that open out on the underside of the base (3), and the bar (1) comprises two or more click elements (6) that are received in the respective recesses, wherein these click elements (6) are provided to make click connections with two or more dental implants (2) for connecting the bar (1) to the dental implants (2).

2. Bar (1) according to Claim 1, **characterized in that** said biocompatible material comprises a polyaryletherketone.

3. Bar (1) according to Claim 1 or 2, **characterized in that** the click elements (6) are cup-shaped.

4. Bar (1) according to one of the preceding claims, **characterized in that** the click elements (6) are glued into the respective recesses.

5. Bar (1) according to one of the preceding claims, **characterized in that** the bar (1) comprises covers (8) that envelop respective recesses and connecting pieces (9) that connect certain of these covers (8) to one another successively, wherein these covers (8) are cylindrical.

6. Bar (1) according to Claim 5, **characterized in that** the base (3) is provided to extend along the jaw bone in a longitudinal direction, wherein the covers (8) extend successively next to each other viewed along this longitudinal direction and form local thickenings of the base (3).

7. Assembly of an overdenture and a bar (1), wherein the bar (1) is a bar (1) according to one or more Claims 1 to 6.

8. Assembly according to Claim 7, **characterized in that** the overdenture is connectable to the bar (1), for which it comprises a component with a cavity in which the bar (1) is receivable as a form-fit and detachably, wherein among other things this component imitates the gums.

9. Assembly according to Claim 7, **characterized in that** the assembly comprises a holder in which the bar (1) is receivable as a form-fit and the overdenture comprises a component with a cavity in which the holder is receivable as a form-fit, wherein among other things this component imitates the gums.

10. Assembly according to one of Claims 8 or 9, **characterized in that** said component is made of a plastic, preferably polymethyl methacrylate.

11. Overdenture (5) that is provided to interact with dental implants (2) anchored in a jaw bone, comprising a component (4) that among other things imitates the gums and comprising click elements (6) for making click connections for connecting the overdenture (5) to the dental implants (2), **characterized in that** the overdenture (5) comprises a bar (1) according to one or more of Claims 1 to 6 and said click elements (6) of the overdenture (5) are the click elements (6) of the bar (1), and **in that** said component (4) comprises an underside that is provided to be directed towards the jaw bone with the implants (2), wherein this underside comprises one or more openings (10) that provide access to a cavity of said component (4), and wherein the bar (1) is received in this cavity in such a way that the click elements (6) are accessible and are provide to make click connections for connecting the overdenture (5) to the dental implants (2).

12. Overdenture (5) according to Claim 11, **characterized in that** the underside comprises several said openings (10) that provide access to the cavity and the number of openings (10) matches the number of click elements (6) and the mutual position of the openings (10) matches the mutual position of the click elements (6), and wherein the bar (1) is received in this cavity in such a way that the openings (10) and the respective click elements (6) are in line with each other and the click elements (6) are thus accessible through the respective openings (10) and are provided to make click connections (6) for connecting the overdenture (5) to the dental implants (2).

13. Overdenture (5) according to Claim 11 or 12, **characterized in that** said cavity and the bar (1) are a form-fit, so that the bar (1) occupies a fixed position relative to said component (4).

14. Overdenture (5) according to Claim 11 or 12, **characterized in that** the overdenture (5) comprises a holder (12) in which the bar (1) is receivable as a form-fit and the holder (12) is receivable as a form-fit in said cavity of the component (4) that among other things imitates the gums.

## Patentansprüche

1. Steg (1) zum Verbinden von Zahnimplantaten (2), die in einem Kieferknochen verankert sind, wobei dieser Steg (1) eine Basis (3) mit einer Unterseite umfasst, die dazu vorgesehen ist, zum Kieferknochen mit den Implantaten (2) hin gerichtet zu werden, wobei der Steg (1) dazu vorgesehen ist, in einem Hohlraum einer Komponente (4) einer Zahnprothese (5) aufgenommen zu werden, wobei diese Komponente (4) unter anderem das Zahnfleisch imitiert, wobei diese Basis (3) aus einem bioverträglichen Material hergestellt ist, das ein Hochleistungspolymer umfasst, **dadurch gekennzeichnet, dass** diese Basis (3) zwei oder mehr Ausnehmungen umfasst, die an der Unterseite der Basis (3) ausmünden, und der Steg (1) zwei oder mehr Klickelemente (6) umfasst, die in den jeweiligen Ausnehmungen aufgenommen werden, wobei diese Klickelemente (6) vorgesehen sind, um Klickverbindungen mit zwei oder mehr Zahnimplantaten (2) herzustellen, um den Steg (1) mit den Zahnimplantaten (2) zu verbinden.

2. Steg (1) nach Anspruch 1, **dadurch gekennzeichnet, dass** das bioverträgliche Material ein Polyaryletherketon umfasst.

3. Steg (1) nach Anspruch 1 oder 2, **dadurch gekennzeichnet, dass** die Klickelemente (6) becherförmig sind.

4. Steg (1) nach einem der vorhergehenden Ansprüche, **dadurch gekennzeichnet, dass** die Klickelemente (6) in die jeweiligen Ausnehmungen eingeklebt sind.

5. Steg (1) nach einem der vorhergehenden Ansprüche, **dadurch gekennzeichnet, dass** der Steg (1) Abdeckungen (8), die jeweilige Ausnehmungen umschließen, und Verbindungsstücke (9) umfasst, die bestimmte dieser Abdeckungen (8) nacheinander miteinander verbinden, wobei diese Abdeckungen (8) zylindrisch sind.

6. Steg (1) nach Anspruch 5, **dadurch gekennzeichnet, dass** die Basis (3) dazu vorgesehen ist, sich entlang des Kieferknochens in einer Längsrichtung zu erstrecken, wobei sich die Abdeckungen (8) entlang dieser Längsrichtung gesehen nacheinander nebeneinander erstrecken und lokale Verdickungen der Basis (3) bilden.

7. Anordnung aus einer Deckprothese und einem Steg (1), wobei es sich bei dem Steg (1) um einen Steg (1) nach einem oder mehreren der Ansprüche 1 bis 6 handelt.

8. Anordnung nach Anspruch 7, **dadurch gekennzeichnet, dass** die Deckprothese mit dem Steg (1) verbindbar ist, wozu sie eine Komponente mit einem Hohlraum umfasst, in dem der Steg (1) formschlüssig und lösbar aufnehmbar ist, wobei diese Komponente unter anderem das Zahnfleisch imitiert.

9. Anordnung nach Anspruch 7, **dadurch gekennzeichnet, dass** die Anordnung eine Halterung umfasst, in der der Steg (1) formschlüssig aufnehmbar ist, und die Deckprothese eine Komponente mit einem Hohlraum umfasst, in dem die Halterung formschlüssig aufnehmbar ist, wobei diese Komponente unter anderem das Zahnfleisch imitiert.

10. Anordnung nach einem der Ansprüche 8 oder 9, **dadurch gekennzeichnet, dass** die Komponente aus einem Kunststoff, bevorzugt Polymethylmethacrylat, hergestellt ist.

11. Deckprothese (5), die zum Zusammenwirken mit in einem Kieferknochen verankerten Zahnimplantaten (2) vorgesehen ist, umfassend eine Komponente (4), die unter anderem das Zahnfleisch imitiert, und umfassend Klickelemente (6) zum Herstellen von Klickverbindungen zum Verbinden der Deckprothese (5) mit den Zahnimplantaten (2), **dadurch gekennzeichnet, dass** die Deckprothese (5) einen Steg (1) nach einem oder mehreren der Ansprüche 1 bis 6 umfasst und es sich bei den Klickelementen (6) der Deckprothese (5) um die Klickelemente (6) des Stegs (1) handelt, und dass die Komponente (4) eine Unterseite umfasst, die dazu vorgesehen ist, zum Kieferknochen mit den Implantaten (2) gerichtet zu werden, wobei diese Unterseite eine oder mehrere Öffnungen (10) umfasst, die Zugang zu einem Hohlraum der Komponente (4) vorsehen, und wobei der Steg (1) in diesem Hohlraum so aufgenommen ist, dass die Klickelemente (6) zugänglich sind und vorgesehen sind, Klickverbindungen zum Verbinden der Deckprothese (5) mit den Zahnimplantaten (2) herzustellen.

12. Deckprothese (5) nach Anspruch 11, **dadurch gekennzeichnet, dass** die Unterseite mehrere dieser Öffnungen (10) umfasst, die Zugang zu dem Hohlraum vorsehen, und die Anzahl der Öffnungen (10) der Anzahl der Klickelemente (6) entspricht und die gegenseitige Position der Öffnungen (10) der gegenseitigen Position der Klickelemente (6) entspricht, und wobei der Steg (1) in diesem Hohlraum so aufgenommen ist, dass die Öffnungen (10) und die jeweiligen Klickelemente (6) zueinander ausgerichtet sind und die Klickelemente (6) somit durch die jeweiligen Öffnungen (10) zugänglich sind und vorgesehen sind, Klickverbindungen (6) zum Verbinden der Deckprothese (5) mit den Zahnimplantaten (2) herzustellen.

13. Deckprothese (5) nach Anspruch 11 oder 12, **dadurch gekennzeichnet, dass** der Hohlraum und der Steg (1) einen Formschluss bilden, so dass der Steg (1) eine feste Position relativ zu der Komponente (4) einnimmt.

14. Deckprothese (5) nach Anspruch 11 oder 12, **dadurch gekennzeichnet, dass** die Deckprothese (5) eine Halterung (12) umfasst, in der der Steg (1) formschlüssig aufnehmbar ist, und die Halterung (12) formschlüssig in dem Hohlraum der Komponente (4) aufnehmbar ist, die unter anderem das Zahnfleisch imitiert.

## Revendications

1. Barre (1) pour relier des implants dentaires (2) qui sont ancrés dans un os de mâchoire, dans laquelle cette barre (1) comprend une base (3) avec une sous-face qui est prévue pour être dirigée vers l'os de mâchoire avec les implants (2), dans laquelle la barre (1) est prévue pour être reçue dans une cavité d'un composant (4) d'une prothèse dentaire (5), dans laquelle ce composant (4) entre autres imite les gencives, dans laquelle cette base (3) est faite d'un matériau biocompatible comprenant un polymère à haute performance, **caractérisée en ce que** cette base (3) comprend deux, ou plus, évidements qui s'ouvrent sur la sous-face de la base (3), et la barre (1) comprend deux, ou plus, éléments d'encliquetage (6) qui sont reçus dans les évidements respectifs, dans laquelle ces éléments d'encliquetage (6) sont prévus pour réaliser des liaisons à encliquetage avec deux, ou plus, implants dentaires (2) pour relier la barre (1) aux implants dentaires (2).

2. Barre (1) selon la revendication 1, **caractérisée en ce que** ledit matériau biocompatible comprend une polyaryléthercétone.

3. Barre (1) selon la revendication 1 ou 2, **caractérisée en ce que** les éléments d'encliquetage (6) sont en forme de coupelle.

4. Barre (1) selon l'une des revendications précédentes, **caractérisée en ce que** les éléments d'encliquetage (6) sont collés dans les évidements respectifs.

5. Barre (1) selon l'une des revendications précédentes, **caractérisée en ce que** la barre (1) comprend des coiffes (8) qui enveloppent des évidements respectifs et des pièces de liaison (9) qui relient certaines de ces coiffes (8) les unes aux autres successivement, dans laquelle ces coiffes (8) sont cylindriques.

6. Barre (1) selon la revendication 5, **caractérisée en ce que** la base (3) est prévue pour s'étendre le long de l'os de mâchoire dans une direction longitudinale, dans laquelle les coiffes (8) s'étendent successivement les unes à côté des autres en vue le long de cette direction longitudinale et forment des épaississements locaux de la base (3).

7. Ensemble d'une prothèse supradentaire et d'une barre (1), dans lequel la barre (1) est une barre (1) selon une ou plusieurs revendications 1 à 6.

8. Ensemble selon la revendication 7, **caractérisé en ce que** la prothèse supradentaire peut être relié à la barre (1), pour laquelle elle comprend un composant avec une cavité dans laquelle la barre (1) peut être reçue en adéquation de forme et de façon détachable, dans lequel, entre autres, ce composant imite les gencives.

9. Ensemble selon la revendication 7, **caractérisé en ce que** l'ensemble comprend un support dans lequel la barre (1) peut être reçue en adéquation de forme et la prothèse supradentaire comprend un composant avec une cavité dans laquelle le support peut être reçu en adéquation de forme, dans lequel, entre autres, ce composant imite les gencives.

10. Ensemble selon l'une des revendications 8 ou 9, **caractérisé en ce que** ledit composant est fait d'un plastique, de préférence de méthacrylate de polyméthyle.

11. Prothèse supradentaire (5) qui est prévue pour interagir avec des implants dentaires (2) ancrés dans un os de mâchoire, comprenant un composant (4) qui, entre autres, imite les gencives et comprenant des éléments d'encliquetage (6) pour réaliser des liaisons à encliquetage pour relier la prothèse supradentaire (5) aux implants dentaires (2), **caractérisée en ce que** la prothèse supradentaire (5) comprend une barre (1) selon une ou plusieurs des revendications 1 à 6 et lesdits éléments d'encliquetage (6) de la prothèse supradentaire (5) sont les éléments d'encliquetage (6) de la barre (1), et **en ce que** ledit composant (4) comprend une sous-face qui est prévue pour être dirigée vers l'os de mâchoire avec les implants (2), dans laquelle cette sous-face comprend une ou plusieurs ouvertures (10) qui fournissent un accès à une cavité dudit composant (4), et dans laquelle la barre (1) est reçue dans cette cavité de manière telle que les éléments d'encliquetage (6) soient accessibles et soient prévus pour réaliser des liaisons à encliquetage pour relier la prothèse supradentaire (5) aux implants dentaires (2).

12. Prothèse supradentaire (5) selon la revendication 11, **caractérisée en ce que** la sous-face comprend plusieurs dites ouvertures (10) qui fournissent un accès à la cavité et le nombre d'ouvertures (10) correspond au nombre d'éléments d'encliquetage (6) et la position mutuelle des ouvertures (10) correspond à la position mutuelle des éléments d'encliquetage (6), et dans laquelle la barre (1) est reçue dans cette cavité de manière telle que les ouvertures (10) et les éléments d'encliquetage respectifs (6) soient alignés les uns avec les autres et les éléments d'encliquetage (6) sont ainsi accessibles à travers les ouvertures respectives (10) et sont prévus pour réaliser des liaisons à encliquetage (6) pour relier la prothèse supradentaire (5) aux implants dentaires (2).

13. Prothèse supradentaire (5) selon la revendication 11 ou 12, **caractérisée en ce que** ladite cavité et la barre (1) sont une adéquation de forme, pour que la barre (1) occupe une position fixe relativement audit composant (4).

14. Prothèse supradentaire (5) selon la revendication 11 ou 12, **caractérisée en ce que** la prothèse supradentaire (5) comprend un support (12) dans lequel la barre (1) peut être reçue en adéquation de forme et le support (12) peut être reçu en adéquation de forme dans ladite cavité du composant (4) qui, entre autres, imite les gencives.
